# EUROPEAN PATENT APPLICATION

(11) **EP 1 887 461 A1**
(43) Date of publication of application: **13.02.2008**
(21) Application number: 07007106.3
(22) Date of filing: 04.04.2007
(51) Int. Cl.: G06F 9/44

(54) **Software creating method**

(30) Priority: 10.08.2006 JP 2006218167
(71) Applicant: MITSUBISHI ELECTRIC CORPORATION, Chiyoda-ku Tokyo 100-8310 (JP)
(72) Inventor: Yamauchi, Kenji, Chiyoda-ku Tokyo 100-8310 (JP); Fujita, Atsufumi, Chiyoda-ku Tokyo 100-8310 (JP)
(74) Representative: Popp, Eugen

(57) **Abstract**

A power supervisory control operation object of an abstract class comprises a trigger object, an input object, an operation object and an output object as function objects. The power supervisory control operation object does not contain the entities of the function objects therein, and holds only the reference information to the function objects, thereby enhancing the maintenance of the function objects.

## Description

### BACKGROUND OF THE INVENTION

### 1. Field of the Invention

The present invention relates to a software creating method of creating software relating to a target operation constituting a system such as a power system supervisory control (hereinafter referred to as power supervisory control) system or the like by an object-oriented programming.

### 2. Description of the Related Art

Japanese Patent No. 3,637,693 (pp 3 to 6, Fig. 1) discloses the framework of a power distribution automating system. The framework is divided into layers such as an individual application layer, a power distribution automated layer, a power supervisory control layer and a supervisory control basic layer, and a trouble judging object for troubles of electricity distribution lines is indicated as an object belonging to the power distribution automated layer.

The trouble judging object for troubles of electricity distribution lines carries out a trouble judgment on the basis of an operation status of a protection relay and other additive information (facility status, etc.). There are various specifications of the trouble judgment, and in order to adapt to the difference among these specifications, a method (function) is overridden (the method is substantialized). With respect to the processing of the method, the specification is varied in accordance with the system, and the difference in specification is absorbed by creating a system-specialized derived class inherited from an abstract class of the trouble judging object and overriding the method with the derived class.

The conventional framework is constructed as described above. An abstract class describing a common specification among electric power companies is prepared as a framework, and the difference in specification among the electric power companies is absorbed by inheriting an object and overriding each method (function) constituting the object with a derived class generated through the inheritance.

However, not only the specification is varied among electric power companies, but also the specification is varied bit by bit among places at which branch offices are set up even when the branch offices belong to the same electric power company. Therefore, the number of combinations of override functions based on the inheritance is increased.

For example, a trouble judging object for A electric power B branch office for each system, a trouble judging obj ect for A electric power C branch office, etc. are derived from a trouble judging object as a common abstract class, and achieved by overriding method functions A, B and C. In each electric power company, the specification is varied bit by bit among branch offices, and thus the combinations of variations of the functions A, B and C are enormous. However, since each derived class holds an override function therein, for example, a function A₁ duplicatively exists in the trouble judging object for A electric power B branch office, the trouble judging object for B electric power E branch office and the trouble judging obj ect for C electric power J branch office. Accordingly, when a trouble occurs in the function A₁, it is necessary to make the same repair to all the objects containing the function A₁, which causes a problem in maintenance of software.

Furthermore, when an operation object configured so as to have a method function is created, it is necessary to reduce the programming amount.

### SUMMARY OF THE INVENTION

The invention has been implemented in view of the foregoing problem, and has an object to provide a software creating method that can efficiently manufacture and maintain applications even when there are enormous combinations such as the difference in specification among clients, places, etc.

In order to attain the above object, according to the invention, in a software creating method of creating software relating to a target operation constituting a system by an object-oriented programming, an operation object of the target operation comprises plural function objects, does not contain the entities of the function objects therein and holds only reference information to the function objects.

As described above, according to the invention, in the software creating method of creating the software relating to the target operation constituting the system by an object-oriented programming, the operation object of the target operation comprises the plural function objects, does not contain the entities of the function objects therein and holds only the reference information to the function objects. Therefore, only one entity may be provided for the function objects, and the maintenance efficiency of the software of the function object can be enhanced.

The foregoing and other object, features, aspects, and advantages of the present invention will become more apparent from the following detailed description of the present invention when taken in conjunction with the accompanying drawings.

### BRIEF DESCRIPTION OF THE DRAWINGS

Fig. 1 is a block diagram showing an object automatically generating method in a framework of trouble judgment of a power distribution automating system according to a first embodiment of the invention;
Fig. 2 is a block diagram showing an object automatically generating method in a framework of a power supervisory control system according to the first embodiment of the invention;
Fig. 3 is a block diagram showing an object automatically generating method in a framework of a power supervisory control system according to a second embodiment of the invention;
Fig. 4 is a block diagram showing an object automatically generating method in a framework of a power supervisory control system according to a third embodiment of the invention;
Fig. 5 is a block diagram showing an object automatically generating method in a framework of a power supervisory control system according to a fourth embodiment of the invention;
Fig. 6 is a block diagram showing an object automatically generating method in a framework of a power supervisory control system according to a fifth embodiment of the invention;
Fig. 7 is a block diagram showing an object automatically generating method in a framework of a power supervisory control system according to a sixth embodiment of the invention; and
Fig. 8 is a block diagram showing an object automatically generating method in a framework of a power supervisory control system according to a seventh embodiment of the invention.

### DETAILED DESCRIPTION OF THE PREFERRED EMBODIMENTS

Preferred embodiments according to the invention will be described hereunder with reference to the accompanying drawings.

### First Embodiment

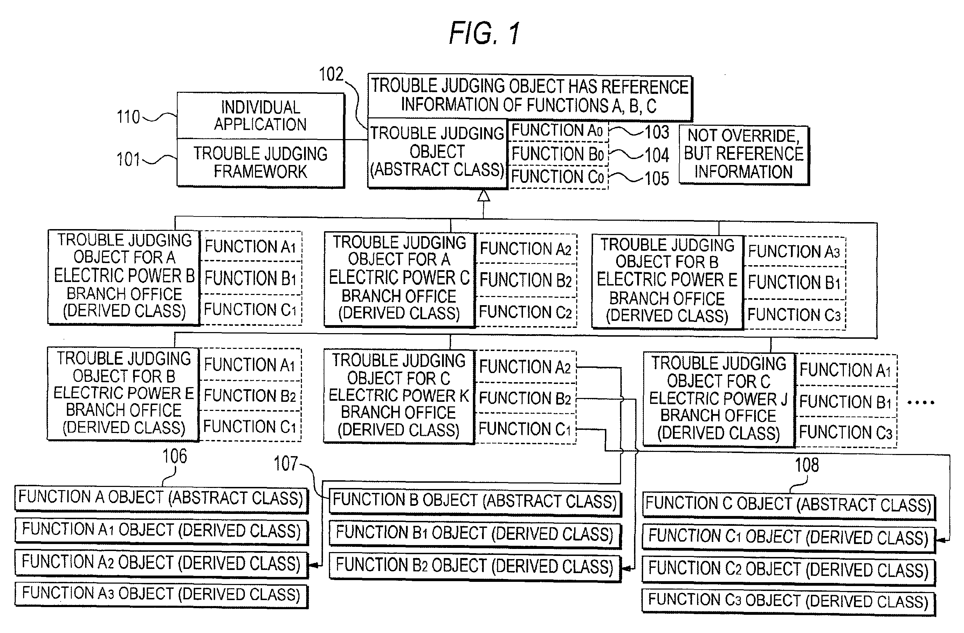

Fig. 1 is a block diagram showing an object automatically generating method in a framework of trouble judgment in a power distribution automating system according to a first embodiment of the invention.

In Fig. 1, a trouble judging frame work 101 of a power distribution automating system has individual trouble judgment applications 110. A trouble judging object 102 belonging to the trouble judging framework 101 is an abstract class common to trouble judging objects. Each function object constituting this operation object (trouble judging object) is each function object, and the operation object has only reference information pieces 103 to 105 of the respective function objects. That is, the operation object has the reference information 103 to a function A object, the reference information 104 to a function B object and the reference information 105 to a function C object. The entity 106 of the function A object, the entity 107 of the function B object and the entity 108 of the function C object are referred to on the basis of the reference information 103 to the function A object, the reference information 104 to the function B object and the reference information 105 to the function C object. That is, the trouble judging object has only the reference information of the function used for the trouble judgment.

As the function objects are provided a function A object (abstract class), a function A₁ object (derived class), a function A₂ object (derived class) and a function A₃ object (derived class). The same is applied to the function B object and the function C object.

The trouble judging obj ect is created every branch office of each electric power company like a trouble judging object for A electric power B branch office, and it is different bit by bit.

Here, software implementing a target operation will be referred to as an operation object, and software for implementing each of functions into which the target operation is divided will be referred to as a function object.

An object generating method in a frame work of trouble judgment of a power distribution automating system according to the first embodiment of the invention will be described with reference to Fig. 1.

The trouble judging object 102 of a power distribution line trouble carries out a trouble judgment on the basis of an operation status of a protection relay and other additive information (equipment status, etc.). The specification of the trouble judgment is variously varied in accordance with the policy as to how the operation status of the protection relay is interpreted.

The trouble judging object 102 contains a function Ao object, a function Bo object and a function Co object to be overridden. With respect to the processing of the function, since the specification is different every system, and thus the entities of derived classes inherited from the abstract class are prepared as the function objects like 106 to 108.

Subsequently, system-specialized derived classes inherited from the trouble judging object 102 are created, and the derived classes have the reference information to the entities of the derived classes of the respective functions A, B and C, thereby absorbing the difference in specification.

As described above, the respective operation objects such as the trouble judging object, etc. do not have the entities of the function A object, the function B object and the function C object, but hold only the reference information to these function objects. Therefore, the entity of each of the function A object, the function B object and the function C object is located at one place. Therefore, the maintenance efficiency of software can be enhanced.

Next, there will be described a case where the object generation method as described above is applied to automatic generation of a power supervisory control operation object in the framework of a power supervisory control system.

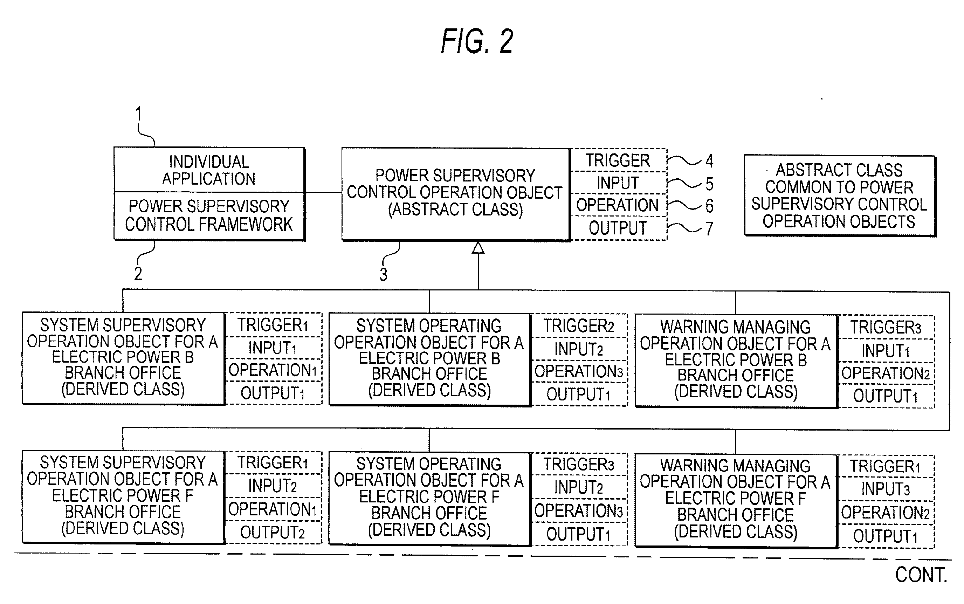

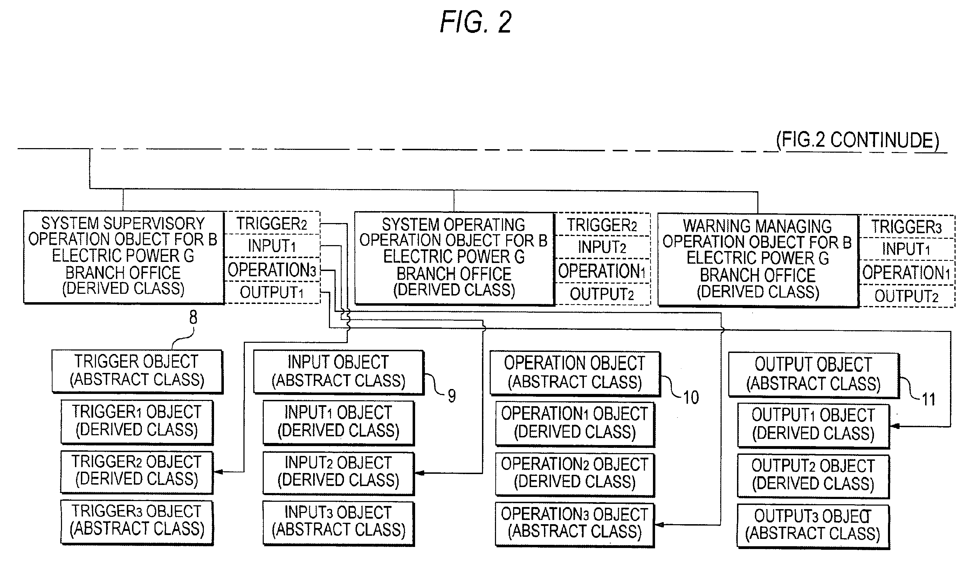

Fig. 2 is a block diagram showing an object automatically generating method in the framework of the power supervisory control system according to the first embodiment of the invention.

In Fig. 2, a power supervisory control framework 2 has individual power supervisory operation applications 1. A power supervisory control operation object 3 belonging to the power supervisory control frame work 2 is an abstract class common to the power supervisory control operation objects, and respective function objects constituting this operation object are four function objects of a trigger object, an input object, an operation object and an output object. The operation object has only reference information pieces 4 to 7 of the respective function objects.

When a condition for starting the processing is checked by the trigger object and then the condition concerned is satisfied, the trigger object starts the input object. The input object achieves input data from a data achievable place and delivers the input data to the operation object. The operation is executed on the data by the operation object, and the operation result is delivered to the output object. The output object outputs the operation result to a place to which the data should be output.

The function objects to be referred to by the power supervisory control operation object 3 contain an abstract class as the entity 8 of the trigger object and derived classes thereof, an abstract class as the entity 9 of the input object and derived classes thereof, an abstract class as the entity 10 of the operation object and derived classes thereof and an abstract class as the entity 11 of the output object and derived classes thereof.

In Fig. 2, a system monitoring operation object, a system operating operation object, a system operating operation object and a warning managing operation object are shown as examples of the power supervisory control operation object 3, and variations for A electric power B branch office, A electric power F branch office and B electric power G branch office for each of the above operation objects are shown.

The object generating method in the framework of this invention will be described with reference to Fig. 2.

Each operation object of the power supervisory control operation object 3 is designed in a common structure so that it is constructed by four function objects of a trigger object, an input object, an operation object and an output object.

The trigger object is a function object having a function of starting the input object with a trigger such as some event, a timer or the like. Various kinds of trigger objects inherited from a trigger class as an abstract class are prepared as derived classes in accordance with the type of the trigger.

The input object is a function object having a function of achieving target data from a target input source and delivering the data to the operation object. Various kinds of input objects inherited from an input class as an abstract class are prepared as derived classes in accordance with the type of the input source.

The operation object is a function object of receiving and operating the data input by the input object. Various kinds of operation objects inherited from an operation class as an abstract class are prepared as derived classes in accordance with the type of the operation.

The output object is a function object having a function of receiving the operation result from the operation object and outputting the operation result to an output target destination. Various kinds of output objects inherited from an output class as an abstract class are prepared as derived classes in accordance with the type of the output destination.

Each operation object for each branch of each electric power company is generated by selecting each function object of the trigger object, the input object, the operation object and the output object in accordance with the required specification and holding the reference information of these objects therein.

According to the first embodiment, as in the case of the power distribution automating system, the respective operation objects such as the trouble judging object, etc. do not have the entities of the functions A, B and C therein, but hold only the reference information thereof. Therefore, entity of each of the functions A, B and C is provided only at one place, and thus the maintenance efficiency of software can be enhanced.

That is, as in the case of the power supervisory control framework, each operation object does not have the entity of the function object therein, but has the reference information of the function object therein. Therefore, only one entity is provided with respect to each kind of function object, and thus the maintenance efficiency of the software of the function object can be enhanced.

### Second Embodiment

In the first embodiment, it is required that a function object whose reference information is to be held in each operation object is defined by programming to generate the operation object. The second embodiment has been implemented to overcome this problem. That is, the programming can be eliminated by automatically generating each operation object from a definition file.

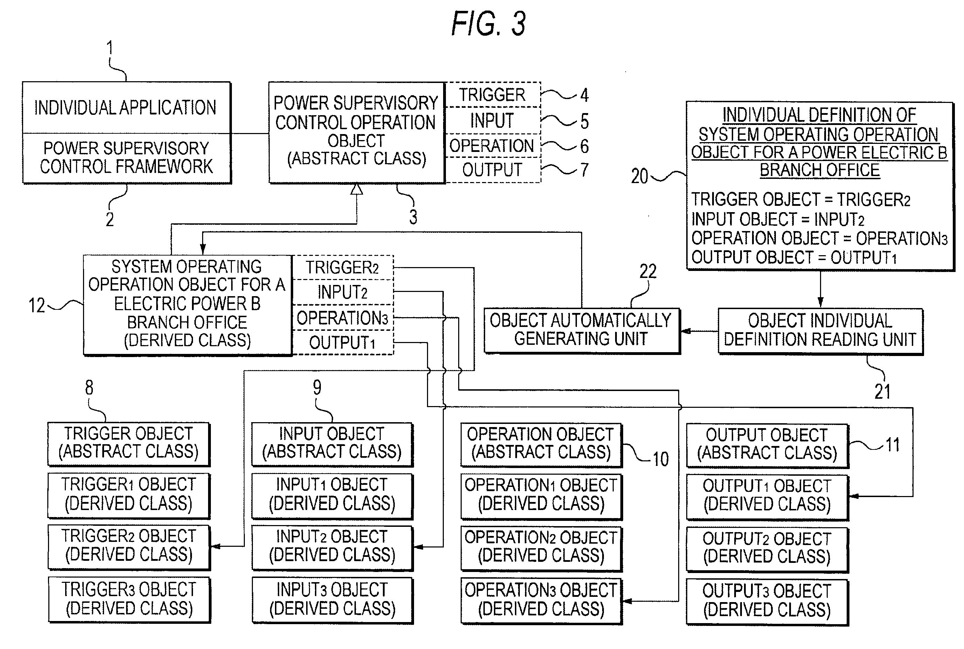

Fig. 3 is a block diagram showing an object automatically generating method in a framework of a power supervisory control system according to a second embodiment of the invention. Fig. 3 shows an example of the system operating operation object, however, the same is applicable to any operation object.

In Fig. 3, reference numerals 1 to 11 are identical to those shown in Fig. 2. The definition file 20 is a file serving as an origin when the operation object is automatically generated. In the example of Fig. 3, the definition file 20 defines a system operating operation for A electric power B branch office, and it defines that a trigger₂ is used for the trigger object, an input₂ is used for the input object, an operation₃ is used for the operation object and an output₁ is used for the output object.

An object individual definition reading unit 21 reads the definition file 20. An object automatically generating unit 22 automatically generates an operation object on the basis of the content of the definition file 20 read by the object individual definition reading unit 21. In Fig. 3, the system operating operation object 12 for A electric power B branch office is automatically generated.

The operation will be described hereunder with reference to Fig. 3.

First, a definition file 20 as an individual definition of each operation object which is specialized to the system is prepared (first procedure). The object individual definition reading unit 21 reads the definition file 20 (second procedure), and interprets the definition content thereof. The object automatically generating unit 22 automatically generates an operation object holding the reference information of each function object therein according to the definition content interpreted by the object individual definition reading unit 21 (third procedure). In Fig. 3, the system operating operation object 12 for the A electric power B branch office is automatically generated.

As described above, according to the second embodiment, each operation application is automatically generated from the definition file, and thus no programming is required. Therefore, the production efficiency of the application can be enhanced.

Furthermore, when the behavior of the operation object is changed, not the program, but the definition file may be edited, so that the maintenance efficiency of software can be also enhanced.

### Third Embodiment

In the second embodiment, the operation object can be automatically generated, however, the respective function objects of trigger, input, operation and output are required to be prepared by programming in advance. Particularly, the operation object programs complicated operation processing, and thus it has a problem that the number of derived classes is increased because respective systems have many minute differences and thus it is difficult to make the operation object common to them.

The third embodiment has been implemented to solve the above problem. A relational data base is applied as an on-line data base, the operation processing is executed on a virtual table by the virtual table function of the relational data base, and data after the operation processing is executed are input, whereby the operation object can be eliminated. Furthermore, the operation content in the virtual table is given by the definition file, so that the programming of the operation is eliminated.

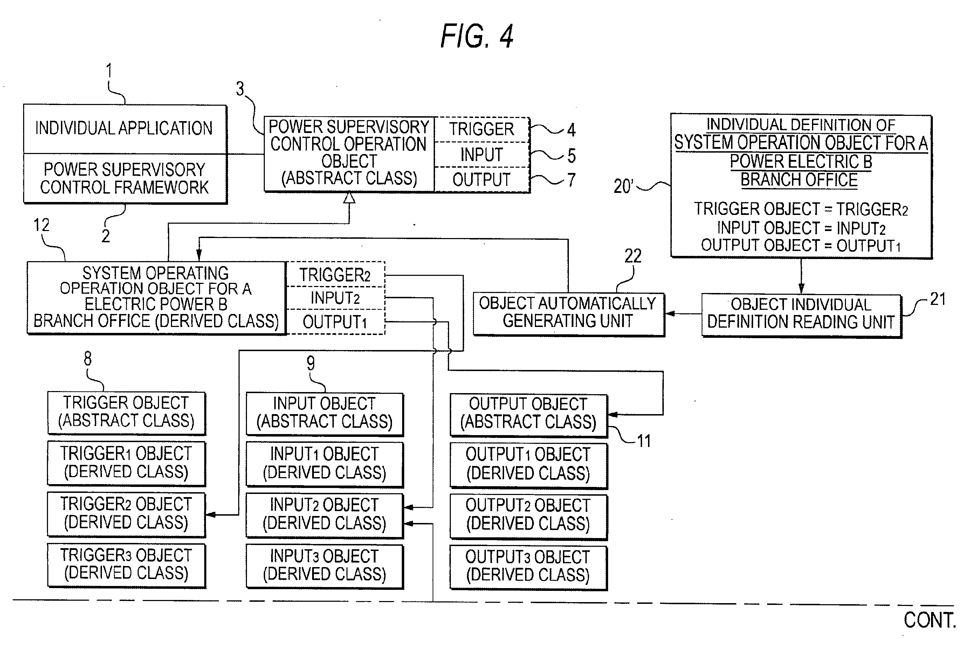

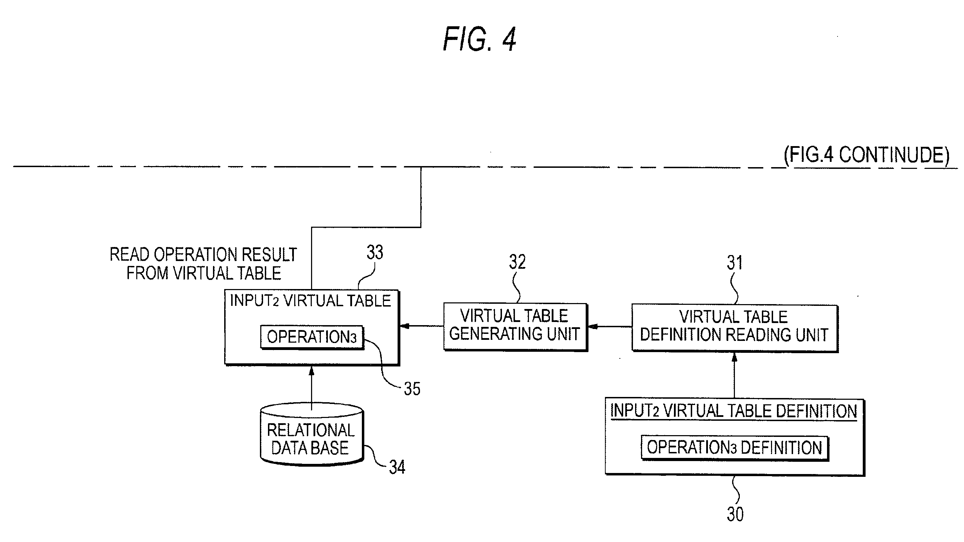

Fig. 4 is a block diagram showing an object automatically generating method in a framework of a power supervisory control system according to a third embodiment of the invention.

In Fig. 4, reference numerals 1 to 5, reference numerals 7 to 12 and reference numeral 21 are identical to those shown in Fig. 3. In a definition file 20', the system-specialized operation object is individually defined, and the definition of the operation object is not required. A virtual table definition file 30 defines the structure of a virtual table at the input source, and contains the definition of the operation content. A virtual table definition reading unit 31 reads the virtual table definition file 30, and interprets the virtual table definition file 30. A virtual table generating unit 32 automatically generates a virtual table 33 on the basis of the interpretation result of the virtual table definition reading unit 31. The operation content 35 defined in the virtual table definition file 30 is contained in the virtual table 33 generated by the virtual table generating unit 32.

The relational data base 34 holds the on-line data. The virtual table function is a function which is generally owned by the data base.

The object generating method will be described with the drawings.

First, the structure of the virtual table is defined in the virtual table definition file 30 every derived class of the input object (fourth procedure). The content of the operation executed in the virtual table is also defined in the virtual table definition file 30.

Subsequently, the virtual table definition reading unit 31 reads the virtual table definition file 30, interprets the definition content (fifth procedure), and delivers it to the virtual table generating unit 32. The virtual table generating unit 32 generates the virtual table 33 according to the interpretation result of the virtual table (sixth procedure). The virtual table 33 contains the operation content defined in the virtual table definition file 30, and thus the result after the operation is the data to be read from the virtual table 33 by the input object.

As described above, according to the third embodiment, the input object reads the operation result in the virtual table, and thus it is unnecessary that the operation object holds the reference information of the operation object and the input object delivers the input data to the operation object to operate the data. Therefore, the operated data are merely read from the input object and delivered to the output object.

Furthermore, the virtual table automatically generates from the virtual table definition file, and thus the operation object itself is not required, so that the production efficiency of software and the maintenance efficiency can be enhanced. Fourth Embodiment

In the third embodiment, an independent definition file is created for each operation obj ect specialized to the system, and thus even when there is a difference in only a part of the overall definition file, the overall definition file is required to be newly created. The fourth embodiment has been implemented to solve this problem, and the definition file is provided with inheritance relationship, and only changed portions are defined in derived definition files, so that it is unnecessary to repeat the same description.

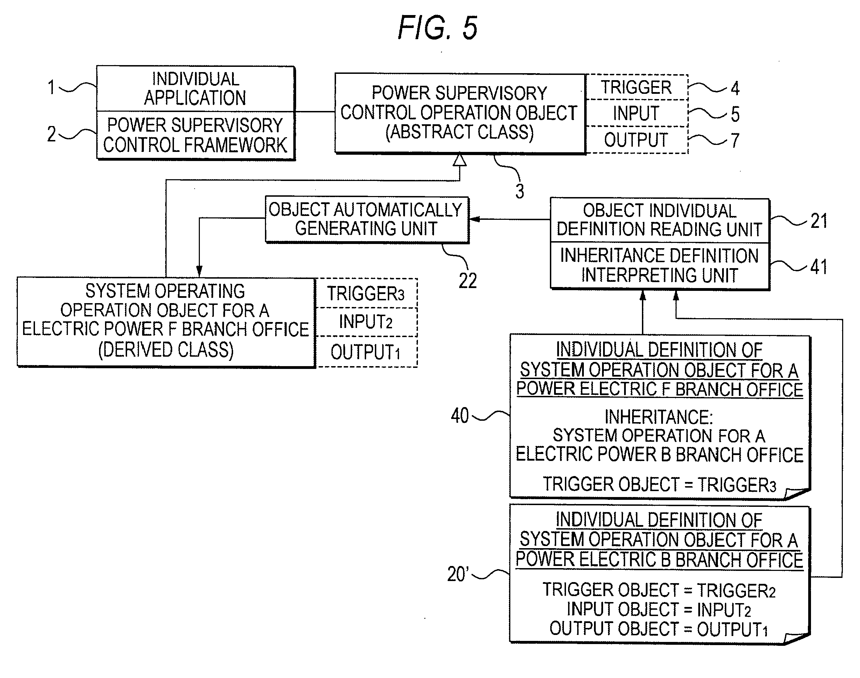

Fig. 5 is a block diagram showing an object automatically generating method in a framework of a power supervisory control system according to a fourth embodiment.

In Fig. 5, reference numerals 1 to 5, 7, 20', 21 and 22 are the same as those of Fig. 4. A definition file 40 which individually defines the system operation object for an A electric power F branch office defines inheritance relationship. An inheritance definition interpreting unit 41 interprets the inheritance relationship of the definition file 40.

An object generating method will be described hereunder with reference to Fig. 5.

When the system operating operation object for the A electric power F branch office is newly generated, the system operating operation object for the A electric power F branch office has the reference information of a trigger₃, an input₂ and an output₁ as function objects, and the existing system operation object for the A electric power B branch office has the reference information of a trigger₂, an input₂ and an output₁. When only the trigger object is different between both the operation objects, the definition file 40 (derived definition file) which individually defines the system operation object for the A electric power F branch office describes only the name of the definition file as the inheritance source (master definition file) and the definition of a trigger object to be overwritten.

In the inheritance definition interpreting unit 41, the definition file 40 of the system operation object for the A electric power F branch office is first read and the definition content is interpreted. When an inheritance is defined in the definition content, the definition file of the inheritance source (in this case, the definition file 20' which individually defines the system operation object for the A electric power B branch office) is read, and the trigger definition defined in the individual definition file 40 of the system operation obj ect for the A electric power F branch office is overwritten on the trigger definition of the individual definition file 20' of the system operation object for the A electric power B branch office.

The object individual definition reading unit 21 reads definition information reflecting the inheritance, interprets the definition content and delivers it to the object automatically generating unit 22. The object automatically generating unit 22 generates the system operating operation object for the A electric power F branch office.

As described above, according to the fourth embodiment, only the changed portion of the existing definition file can be described, and thus the definition file manufacturing efficiency can be enhanced.

Furthermore, there is an effect that function object reference sources of plural operation objects defined in plural definition files of inheritance destinations can be collectively changed by merely changing the definition file of an inheritance source.

### Fifth Embodiment

In the third embodiment, each independent definition file is created for each operation object specialized to the system, and thus even when only a part of the overall definition file is different, the overall definition file is required to be newly created. The fifth embodiment has been implemented to solve the above problem. According to the fifth embodiment, definition files are provided with quoting relationship, and only portions to be quoted are extracted from plural existing definition files and used, so that it is unnecessary to repeat the same description.

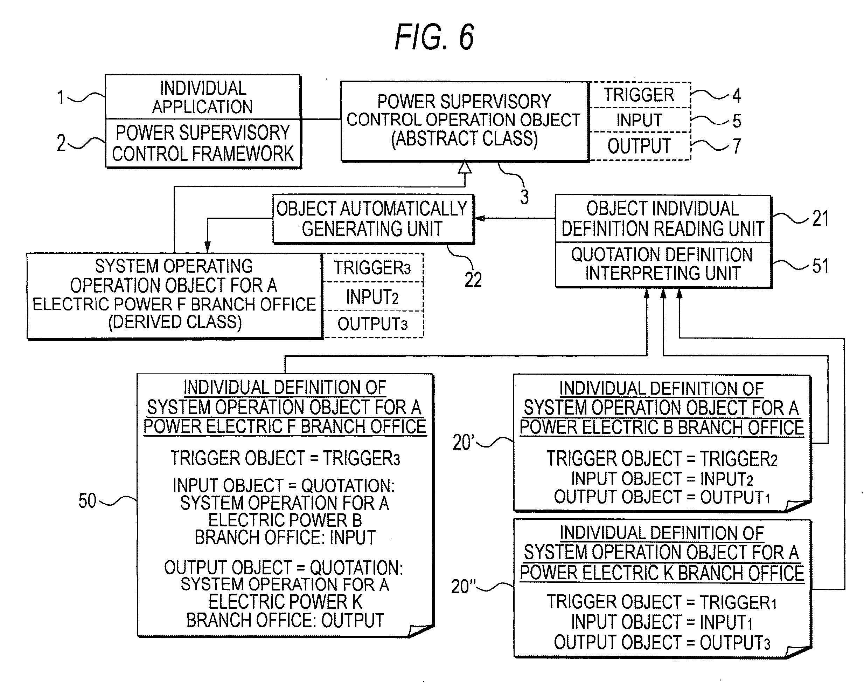

Fig. 6 is a block diagram showing an object automatic generating method in a framework of a power supervisory control system according to the fifth embodiment of the invention.

In Fig. 6, reference numerals 1 to 5, 7, 20', 21 and 22 are identical to those shown in Fig. 4. A definition file 50 defines the quoting relationship of function objects. A quoting definition interpreting unit 51 interprets the quotation definition of function objects of the definition files 50.

An object generating method will be described hereunder with reference to Fig. 6.

When the system operating operation object for the A electric power F branch office is newly generated, the system operating operation object for the A electric power F branch office has the reference information of the trigger₃, the input₂ and the output₁ as the function objects, and the existing system operation object for the A electric power B branch office has the reference information of the trigger₂, the input₂ and the output₁. When the existing system operation object for the A electric power K branch office has the reference information of the trigger₁, the input₁ and the output₃, the name of the definitional file of a quotation source and a function object to be quoted are defined in the definition file 50 which individually defines the system operation object for the A electric power F branch office.

In the quotation definition interpreting unit 51, the definition file 50 which individually defines the system operation object for the A electric power F branch office is first read and the definition content is interpreted. Here, when the quotation is defined in the definition content, the definition file 20' of the quotation source is read, and the definition of the input object of the quoted portion is inserted. Furthermore, a definition file 20" of the quotation source is read, and the definition of the output object of the quoted portion is inserted.

The object individual definition reading unit 21 reads and interprets the definition content after the quotation is reflected, and delivers it to the object automatically generating unit 22. The object automatically generating unit 22 automatically generates the system operating operation object for the A electric power F branch office according to the definition content.

As described above, according to the fifth embodiment, the existing definition file can be partially quoted, and the efficiency of creating the definition file can be enhanced.

Furthermore, this embodiment has an effect that the behavior of the operation object of the quotation destination can be also collectively changed by merely changing the definition file of the quotation source.

### Sixth Embodiment

In the third embodiment, when a definition file has a descriptive error such as a grammatical error, a typographical error or the like, the error has not been found until the object individual definition reading unit reads and interprets the definition file. The sixth embodiment has been implemented to solve this problem, and it can detect a descriptive error at an earlier stage and notifies it to the user by providing a unit for detecting the descriptive error of the definition file.

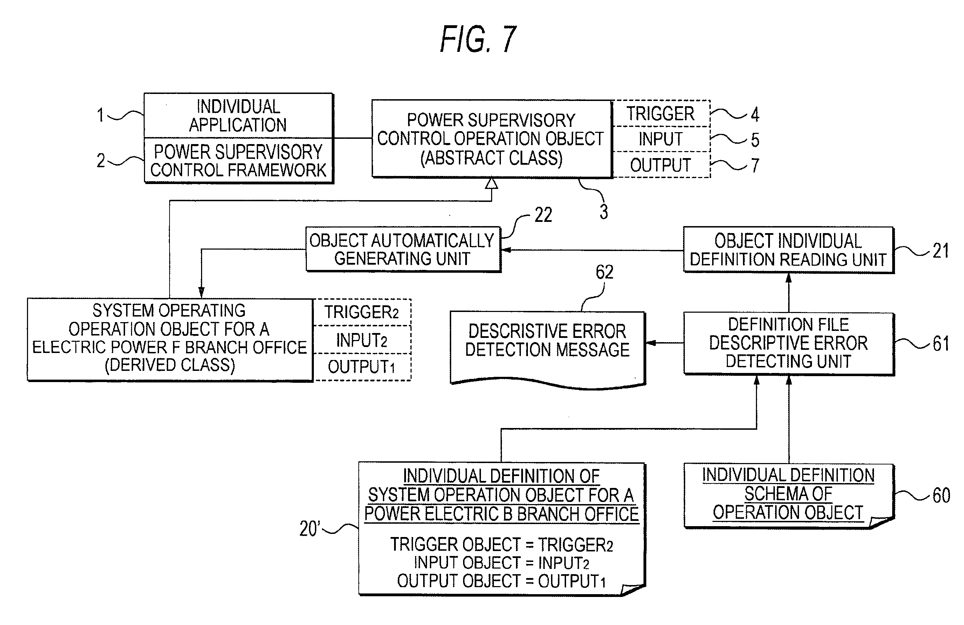

Fig. 7 is a block diagram showing a method of detecting a descriptive error in the object automatic generating method in a framework of a power supervisory control system according to the sixth embodiment of the invention.

In Fig. 7, reference numerals 1 to 5, 7, 20', 21 and 22 are identical to those of Fig. 4. A definition file schema 60 defines the grammar of a definition file. A definition file descriptive error detecting unit 61 detects a descriptive error of a definition file on the basis of the definition file schema 60, and outputs a descriptive error detection message 62 when it detects some descriptive error.

A descriptive error detecting method will be described hereunder with reference to Fig. 7.

The definition file descriptive error detecting unit 61 checks the description content of the definition file 20' according to the pre-defined definition file schema 60, and outputs a descriptive error detection message 62 when a descriptive error is detected. When no descriptive error is detected, the definition file descriptive error detecting unit 61 transmits a definition content to the object individual definition reading unit 21.

As described above, according to the sixth embodiment, the descriptive error of the definition file can be detected at an earlier stage, and the descriptive error content can be transmitted to the user, so that the quality of the definition file can be enhanced and the definition file manufacturing efficiency can be enhanced.

### Seventh Embodiment

In the third embodiment, each operation object specialized to the system holds the reference information of each function object (trigger, input, output), and thus only one set of trigger, input and output objects can be held. Therefore, this embodiment is not adaptable to the case where there are two or more of trigger objects, the case where there are two or more input objects for one trigger object and the case where there are plural output obj ects for one input object.

The seventh embodiment has been implemented to solve the above problem. In this embodiment, a hierarchical structure is established so that the operation object has the reference information of the trigger object, the trigger object has the reference information of the input object and the input object has the reference information of the output object, and each function object is designed so as to have plural reference information pieces of the lower function objects, whereby this embodiment can be adapted to complicated processing.

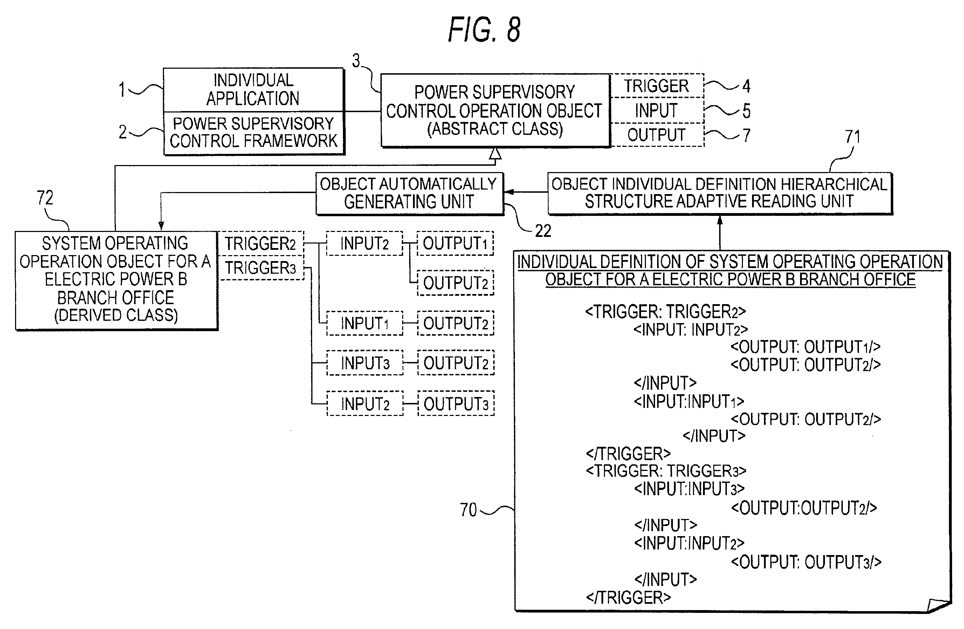

Fig. 8 is a block diagram showing an object automatic generation method in a framework of a power supervisory control system according to the seventh embodiment of the invention.

In Fig. 8, reference numerals 1 to 5, 7 and 22 are identical to those of Fig. 4. A definition file 70 defines function objects under the hierarchical structure. An object individual definition hierarchical structure adaptive reading unit 71 reads the definition file 70 in which the function objects of the hierarchical structure are defined. The object automatically generating unit 22 refers to the definition file 70 in which the function objects of the hierarchical structure are defined, and automatically generates an operation object 72 having the function objects of the hierarchical structure and the respective function objects.

Fig. 8 shows only the reference relationship of the operation object 72 created according to the definition file 70 and the function objects to be referred to by the operation object 72. That is, the operation object 72 refers to the trigger₂ and the trigger₃, the trigger₂ refers to input₂ and input₃, and the trigger₃ refers to input₃ and input₂. The input₂ referred to by the trigger₂ refers to the output₁ and the output₂, the input₁ refers to the output₂, the input₃ referred to by the trigger₃ refers the output₂, and the input₂ referred to by the trigger₃ refers to the output₃. The trigger objects, the input objects and the output objects referred to by the operation object 72 contain the entities of the derived classes, and the trigger object and the input object contain the reference information of the lower function objects of the hierarchical structure.

An object generating method will be described hereunder with reference to Fig. 8.

A target operation object to be generated has the reference information of one or more trigger objects (derived classes) as in the case of the operation object 72 (derived class), the trigger object has the reference information of one or more input objects (derived classes), and the input object has the reference information of one or more output objects (derived classes). That is, the entity of each function object (derived class) is formed so as to have the reference information of a function object (derived class) to be referred to.

First, the definition file 70 which individually defines the system operation object for the A electric power B branch office defining the hierarchical structure of the objects is created. The object individual definition hierarchical structure adaptive reading unit 71 reads the definition file 70 and interprets the definition content, and then delivers it to the object automatically generating unit 22.

The object automatically generating unit 22 automatically generates each function object (the derived class having the entity and reference information) and an operation object referring to the function object according to the definition content so that the operation object 72 has the reference information of the trigger object, the trigger object has the reference information of the input object and the input object has the reference information of the output object.

As described above, according to the seventh embodiment, the hierarchical structure of the objects can be described, and thus an operation object having a more complicated processing content is automatically generated, so that the manufacturing and maintenance efficiencies of software can be enhanced.

Various modifications and alterations of this invention will be apparent to those skilled in the art without departing from the scope and spirit of this invention, and it should be understood that this is not limited to the illustrative embodiments set forth herein.

## Claims

1. A software creating method for creating software associated with a target operation of a system by object-oriented programming, wherein an operation object of the target operation (3) comprises plural function objects, does not contain the entities of the function objects therein and holds only reference information(4-7) to the function objects.

2. The software creating method according to claim 1, comprising:
a first step of creating a definition file(20) for defining the function objects constituting the operation object (3) specialized to each system when the operation object (3) is created;
a second step(21) of reading the definition file(20) created in the first step; and
a third step(22) for generating an operation object(3) having reference information (4-7) of function objects defined in the definition file(20) read in the second step(21).

3. The software creating method according to claim 2, wherein the function objects defined in the definition file (20') contain an input object, and the method further comprising a fourth step of creating a virtual table definition file(30) for defining an operation content executed by a virtual table of a relational data base (34) every input object, a fifth step (31) of reading and interpreting the virtual table definition file(30) created in the fourth step, and a sixth step of creating a virtual table(33) containing the operation content on the basis of the interpretation result of the fifth step(31), the operation result based on the operation content of the virtual table(33) being input to the input object.

4. The software creating method according to claim 2 or 3, wherein the definition file(20') defines the inheritance relationship between definition files, and the second step (21) reads a master definition file (20') when a derived definition file (40) describing information of the master definition file (20') is read, and overwrites the content of the derived definition file(40) on the content of the master definition file (20') to generate the function object having the combined content.

5. The software creating method according to claim 2 or 3, wherein a definition content of the whole or a part of another definition file (20' , 20") is quoted and defined by the definition file(50), and the second step(21) reads the definition file(50) and the other definition(20',20") file quoted by the definition file(50), and inserts the quotation content of the other definition file(20',20") to a quoting place of the definition file(50).

6. The software creating method according to claim 2 or 3, wherein the second step(21) checks a descriptive error of the definition file(20') when the definition file(20') is read, and outputs an error message (62) when a descriptive error is detected.

7. The software creating method according to claim 2 or 3, wherein the function objects constituting each operation object are defined in the definition file(70) so as to have a hierarchical structure, the second step(21) interprets hierarchical information of the function object, and the third step(22) creates the operation object so that the operation object (72) has reference information of the function object, and the function object concerned has reference information of another function object.
